# EUROPÄISCHE PATENTSCHRIFT

(11) **EP 2 335 957 B1**
(45) Veröffentlichungstag und Bekanntmachung des Hinweises auf die Patenterteilung: **05.12.2012**
(21) Anmeldenummer: 10014038.3
(22) Anmeldetag: 27.10.2010
(51) Int. Cl.: B60J 5/06, E05D 15/10

(54) **Schiebetüre für ein Fahrzeug**
Sliding door for a vehicle
Porte coulissante pour véhicule

(30) Priorität: 17.12.2009 DE 102009058584
(43) Veröffentlichungstag der Anmeldung: 22.06.2011
(73) Patentinhaber: DURA Automotive Body and Glass Systems GmbH, 58840 Plettenberg (DE)
(72) Erfinder: Tillmann, Peter, 58840 Plettenberg (DE); Krehmke, Michael, 58840 Plettenberg (DE); Rottmann, Ralf, 57489 Drolshagen (DE)
(74) Vertreter: Zinnecker, Armin

(56) Entgegenhaltungen:
- DE-B3-102008 016 650
- US-A1- 2006 267 375

## Beschreibung

Die Erfindung betrifft eine Schiebetüre für ein Fahrzeug, insbesondere für ein Kraftfahrzeug.

Die Schiebetüre umfaßt eine Führungsschiene, einen Gleitschlitten und ein Führungsteil. Der Gleitschlitten ist an der Führungsschiene längsverschieblich gelagert und durch ein Mehrgelenk mit der Fahrzeugkarosserie verbindbar. Das Führungsteil ist in einer an der Schiebetüre vorgesehenen Führungsbahn geführt.

Eine derartige Schiebetüre ist aus der DE 10 2008 016 650 B3 bekannt. Bei dieser Schiebetüre umfaßt das Mehrgelenk einen Scharnierbügel, der an dem Gleitschlitten und an einem Karosserieflansch drehbar gelagert ist, und einen Steuerhebel, der an dem Gleitschlitten und an einem oder dem Karosserieflansch drehbar gelagert ist. Die vorbekannte Schiebetüre umfaßt ferner einen ersten Zwischenhebel, der an dem Steuerhebel drehbar gelagert ist, und einen zweiten Zwischenhebel, der an dem ersten Zwischenhebel und an dem Gleitschlitten drehbar gelagert ist. Die Schiebetüre ist an dem dem Mehrgelenk abgewandten Ende durch eine Zentrierung drehbar und längsverschieblich gelagert. Sie ist dort arretierbar. Der Steuerhebel weist eine Verlängerung auf, an dem der erste Zwischenhebel drehbar gelagert ist. An dem Verbindungsgelenk des ersten Zwischenhebels und des zweiten Zwischenhebels ist ein Führungsteil vorgesehen, das als Führungsstift ausgestaltet ist und das in einer an der Schiebetüre vorgesehenen Führungsbahn geführt ist. Die Führungsbahn verläuft relativ zur Führungsschiene geneigt. Hierbei verläuft die Führungsbahn in Richtung von dem Scharnierbügel weg nach außen geneigt.

Eine andere Schiebetüre der eingangs angegebenen Art ist in der EP 2 008 846 A2 beschrieben. Hier ist eine Antriebstange vorhanden, die an dem Steuerhebel drehbar gelagert ist. Die Schiebetüre ist an dem dem Mehrgelenk abgewandten Ende durch eine Zentrierung drehbar und längsverschieblich gelagert. Sie ist dort arretierbar. Die Antriebstange ist an der Führungsschiene drehbar gelagert. Der Steuerhebel weist einen Hebelarm auf, an dem die Antriebstange drehbar gelagert ist. An einem Zwischenhebel, der an dem Gleitschlitten drehbar gelagert ist, ist ein Führungsteil vorgesehen, das als Führungsstift ausgebildet ist und das in einer an der Schiebetüre vorgesehenen Führungsbahn geführt ist.

Aus der prioritätsälteren, nicht vorveröffentlichten DE 10 2008 026 137.8 A1 ist eine weitere Schiebetüre der eingangs angegebenen Art bekannt. Hier weist der Steuerhebel einen Hebelarm auf, an dem ein Führungsstift vorgesehen ist, der in einer an der Schiebetüre vorgesehenen Führungsbahn geführt ist. Die Führungsbahn verläuft vorzugsweise in Richtung von dem Scharnierbügel weg nach außen geneigt.

Bei den vorbekannten Lösungen ist der Führungsstift im allgemeinen mit einem gewissen Spiel in der Führungsbahn geführt. Wenn man die Führungsbahn spielfrei herstellen würde, könnte die Reibung des Führungsstifts zu groß werden, so daß die Öffnungs- und Schließbewegung der Schiebetüre nicht hinreichend leichtgängig wäre. Durch das Spiel des Führungsstifts in der Führungsbahn können die Nachteile eines Verschleißes und/oder eines verminderten Bedienungskomforts entstehen.

Eine Schiebetüre nach dem Oberbegriff des Anspruchs 1 ist aus der US 2006/0267375 A bekannt.

Aufgabe der Erfindung ist es, eine verbesserte Schiebetüre nach dem Oberbegriff des Anspruchs 1 vorzuschlagen.

Erfindungsgemäß wird diese Aufgabe durch die Merkmale des Anspruchs 1 gelöst. Das Führungsteil ist als Führungswagen ausgebildet. Hierdurch kann die Führung des Führungsteils an der Führungsbahn spielfrei ausgebildet werden.

Der Führungswagen an einem Hebel drehbar gelagert, der Bestandteil des Mehrgelenks ist.

Vorteilhafte Weiterbildungen sind in den Unteransprüchen beschrieben.

Vorteilhaft ist es, wenn der Führungswagen mehrere Führungsrollen aufweist. In diesem Fall weist der Führungswagen vorzugsweise mindestens zwei Führungsrollen auf. Besonders vorteilhaft ist es, wenn der Führungswagen drei Führungsrollen aufweist.

Eine oder mehrere oder alle Führungsrollen sind vorzugsweise elastisch vorgespannt. Besonders vorteilhaft kann es sein, wenn lediglich eine Führungsrolle elastisch vorgespannt ist. Die Führungsrolle oder die Führungsrollen können durch ein Federelement elastisch vorgespannt sein. Bei dem Federelement kann es sich um eine Zugfeder, eine Druckfeder, eine Blattfeder oder eine sonstige Feder handeln. Die Führungsrolle oder die Führungsrollen können an dem Führungswagen durch einen Hebelmechanismus oder durch einen Schiebermechanismus geführt sein. Ferner ist es möglich, die elastische Vorspannung der Führungsrolle oder der Führungsrollen dadurch zu realisieren, daß die Führungsrolle oder die Führungsrollen eine elastische Rollfläche aufweisen. Vorzugsweise weisen alle Führungsrollen eine elastische Rollfläche auf.

Eine weitere vorteilhafte Weiterbildung ist dadurch gekennzeichnet, daß die Führungsbahn eine erste Führungskontur und eine zweite Führungskontur aufweist. Beim Öffnen der Schiebetüre stützt sich der Führungswagen an einer der beiden Führungskonturen ab, insbesondere an der ersten Führungskontur. Beim Schließen der Schiebetüre stützt sich der Führungswagen an der anderen Führungskontur ab, insbesondere an der zweiten Führungskontur.

Die Führungsbahn kann als Hohlbahn ausgeführt sein. In diesem Fall werden die Führungskonturen von den Begrenzungen der Hohlbahn gebildet. Vorteilhaft ist es, wenn sich der Führungswagen beim Öffnen der Schiebetüre an der innen liegenden Führungskontur abstützt und wenn sich der Führungswagen beim Schließen der Schiebetüre an der außen liegenden Führungskontur abstützt.

Es ist allerdings auch möglich, daß die Führungsbahn als Schiene ausgeführt ist. In diesem Fall werden die Führungskonturen von den Außenkonturen der Schiene gebildet. Vorzugsweise stützt sich der Führungswagen beim Öffnen der Schiebetüre an der außen liegenden Führungskontur ab und stützt sich der Führungswagen beim Schließen der Schiebetüre an der innen liegenden Führungskontur ab.

Eine weitere vorteilhafte Weiterbildung ist **dadurch gekennzeichnet, daß** eine oder mehrere Führungsrollen an einer Führungskontur anliegen und daß eine oder mehrere Führungsrollen an der anderen Führungskontur anliegen.

Besonders vorteilhaft ist es, wenn eine Führungsrolle an einer Führungskontur anliegt und wenn zwei Führungsrollen an der anderen Führungskontur anliegen. In diesem Fall ist es ferner besonders vorteilhaft, wenn die zwei Führungsrollen, die an der anderen Führungskontur anliegen, zu beiden Seiten der Führungsrolle liegen, die an der einen Führungskontur anliegt.

Die Erfindung betrifft ferner ein Fahrzeug, insbesondere ein Kraftfahrzeug, das durch eine oder mehrere erfindungsgemäße Schiebetüren gekennzeichnet ist.

Ein Ausführungsbeispiel der Erfindung wird nachstehend anhand der beigefügten Zeichnung im einzelnen erläutert. In der Zeichnung zeigt
- Fig. 1: eine Schiebetüre für ein Kraftfahrzeug nach der prioritätsälteren, nicht vorveröffentlichten deutschen Patentanmeldung 10 2008 026 137.8 in der geschlossenen Stellung in einer schematischen Ansicht von oben,
- Fig. 2: die Schiebetüre gemäß Fig. 1 in einer teilweise geöffneten Stellung in einer der Fig. 1 entsprechenden schematischen Ansicht von oben,
- Fig. 3: die Schiebetüre gemäß Fig. 1 und 2 in der vollständig geöffneten Stellung in einer den Fig. 1 und 2 entsprechenden schematischen Ansicht von oben,
- Fig. 4: eine erfindungsgemäße Führungsbahn, die als Hohlbahn ausgeführt ist, für die Schiebetüre nach Fig. 1 bis 3 in einer Ansicht von oben,
- Fig. 5: den Führungswagen für die Führungsbahn nach Fig. 4 in einer vergrößerten Ansicht,
- Fig. 6: eine Führungsbahn, die als Schiene ausgeführt ist, für die Schiebetüre nach Fig. 1 bis 3 in einer Ansicht von oben und
- Fig. 7: den Führungswagen für die Führungsbahn nach Fig. 6.

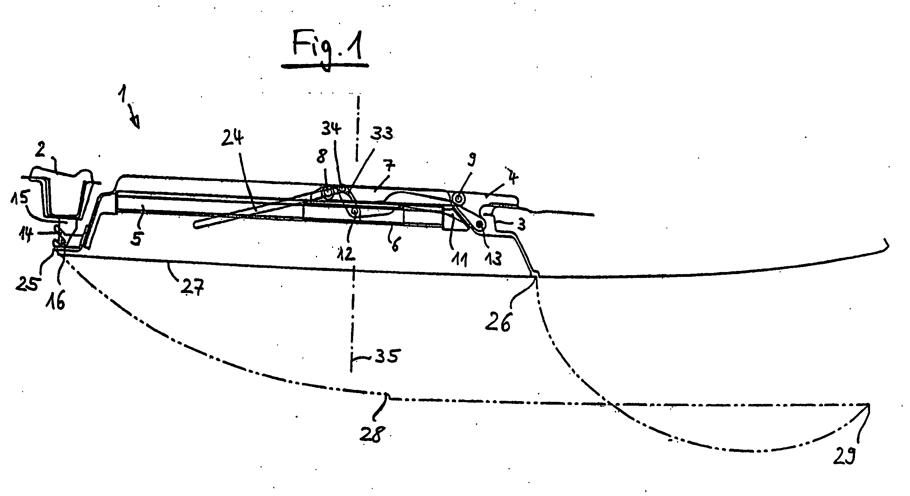

Fig. 1, 2 und 3 zeigen die Schiebetüre 1 nach einem Ausführungsbeispiel der prioritätsälteren, nicht vorveröffentlichten DE 10 2008 026 137 A1. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist. Bei dem hinteren Karosserieteil 3 kann es sich um die C-Säule oder um die A-Säule handeln.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 und einen Steuerhebel 11 auf. Der Scharnierbügel 7 ist an dem Gleitschlitten 6 um ein Gelenk 8 und an dem Karosserieflansch 4 um ein Gelenk 9 drehbar gelagert. Der Steuerhebel 11 ist an dem Gleitschlitten 6 um ein Gelenk 12 und an dem Karosserieflansch 4 um ein Gelenk 13 drehbar gelagert.

An dem Gleitschlitten 6 ist eine Gelenkplatte 21 befestigt, die die Gelenke 8 und 12 trägt. Der Scharnierbügel 7, der Steuerhebel 11, der Gleitschlitten 6 bzw. die Gelenkplatte 21 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Aufnahme 14 vorgesehen, die geneigt zur Fahrzeug-Längsrichtung verläuft, nämlich in Fahrzeugrichtung nach vorne nach innen. Sie ist an ihrem dem Scharnierbügel 7 abgewandten, im Ausführungsbeispiel also vorderen inneren Ende offen. An einem Karosserieflansch 15, der an der B-Säule 2 befestigt ist, ist ein Scharnierbolzen 16 vorgesehen, der in die U-förmige Aufnahme 14 eingreift. In der in Fig. 1 gezeigten, vollständig geschlossenen Stellung der Schiebetüre befindet sich der Scharnierbolzen 16 am Grund der U-förmigen Aufnahme 14. Er kann dort arretiert werden (in der Zeichnung nicht dargestellt).

Der Steuerhebel 11 weist einen Hebelarm 33 auf, der sich von dem Gelenk 12 nach innen erstreckt. Dabei knickt der Hebelarm 33 gegenüber der Verbindungslinie zwischen den Gelenken 13 und 12, also der Längserstreckung des Steuerhebels 11, nach innen ab. Im Ausführungsbeispiel knickt der Hebelarm 33 in einem annähernd rechten Winkel nach innen ab.

An dem Hebelarm 33 ist im Bereich von dessen Ende ein Führungsstift 34 vorgesehen, der in einer Führungsbahn 24 geführt ist. Die Führungsbahn 24 ist an der Schiebetüre 1 vorgesehen. Dementsprechend ist die Führungsbahn 24 also eine türfeste Führungsbahn. Sie verläuft relativ zur Führungsschiene 5 in Richtung von dem Scharnierbügel 7 weg nach außen geneigt. Die Führungsbahn 24 ist durchgehend linear ausgestaltet. Ihre Neigung ist über ihre gesamte Länge gleich groß.

In der vollständig geschlossenen Stellung der Schiebetüre 1, die in Fig. 1 gezeigt ist, liegt der Scharnierbolzen 16 in der U-förmigen Aufnahme 14, und zwar im Bereich von deren Ende. Der Führungsstift 34 befindet sich im Bereich des hinteren, inneren Endes der Führungsbahn 24. Der Steuerhebel 11 weist von dem Gelenk 13 nach vorne. Der Hebelarm 33 weist von dem Gelenk 12 nach innen.

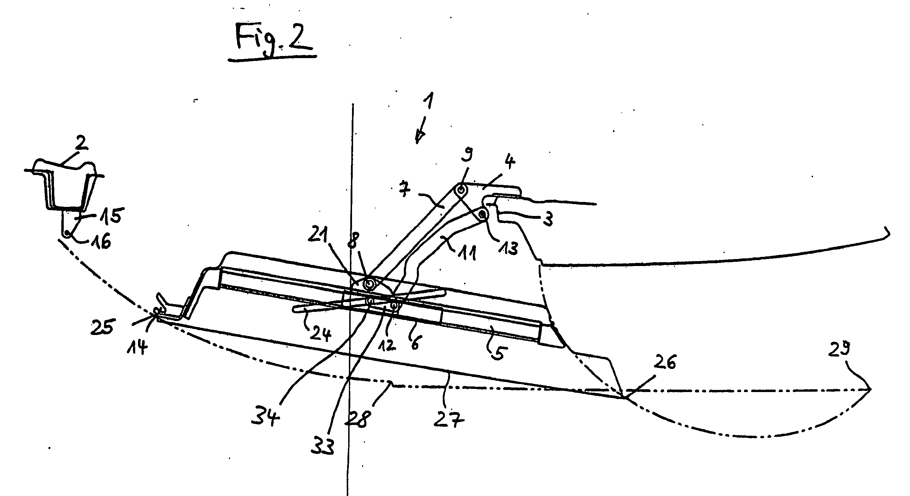

Im Verlauf der Öffnungsbewegung wird die Stellung nach Fig. 2 durchlaufen. Diese Öffnungsbewegung kann dadurch erzeugt werden, daß die Führungsschiene 5 relativ zu dem Gleitschlitten 6 nach hinten bewegt wird. An dem Gleitschlitten 6 kann ein Motor, insbesondere ein Elektromotor, zum Antrieb der Führungsschiene 5 relativ zum Gleitschlitten 6 vorhanden sein. Stattdessen oder zusätzlich kann ein Motor, insbesondere ein Elektromotor, zum Antrieb des Scharnierbügels 7 und/oder des Steuerhebels 11 vorhanden sein. Vorteilhaft ist es, wenn an dem Karosserieflansch 4 oder einem sonstigen Karosserieteil ein Motor zum Antrieb des Scharnierbügels 7 und/oder des Steuerhebels 11 vorhanden ist.

Die Öffnungsbewegung kann allerdings stattdessen oder zusätzlich auch von Hand erzeugt werden. Insbesondere kann die Führungsschiene 5 manuell nach hinten relativ zum Gleitschlitten 6 bewegt werden. Zu diesem Zweck können an der Schiebetüre 1 ein Griff oder mehrere Griffe vorgesehen sein, durch den oder die die Schiebetüre 1 und mit ihr die Führungsschiene 5 relativ zum Gleitschlitten 6 bewegt werden kann. Der Griff kann am inneren vorderen Ende der Schiebetüre 1 und/oder am äußeren vorderen Ende der Schiebetüre 1 und/oder am äußeren hinteren Ende der Schiebetüre 1 vorgesehen sein. Die Schiebetüre 1 kann durch einen Kraftangriff an jeder dieser drei Stellen geöffnet und auch wieder geschlossen werden.

Ohne den Führungsstift 34 könnte der Gleitschlitten 6 auf der Führungsschiene 5 frei verschoben werden. Der in der Führungsbahn 24 geführte Führungsstift 34 verhindert diese freie Verschiebbarkeit und legt die relative Position des Gleitschlittens 6 gegenüber der Führungsschiene 5 und damit gegenüber der Schiebetüre 1 fest. Dies erfolgt in den Abschnitten der Führungsbahn 24, die gegenüber der Führungsschiene 5 eine von Null verschiedene Neigung aufweisen, die also nicht parallel zur Führungsschiene 5 verlaufen. Die Führungsbahn 24 weist auf ihrer gesamten Länge dieselbe von Null verschiedene Neigung gegenüber der Führungsschiene 5 auf.

Wenn die Führungsschiene 5 motorisch und/oder manuell relativ zum Gleitschlitten 6 nach hinten bewegt wird, bewegt sich der in der Führungsbahn 24 geführte Führungsstift 34 relativ zur Führungsschiene 5 und zum Gleitschlitten 6 nach außen, wodurch der Steuerhebel 11 entgegen dem Uhrzeigersinn um das Gelenk 12 gedreht wird. Hierdurch wird der Steuerhebel 11 entgegen dem Uhrzeigersinn um das Gelenk 13 an dem Karosserieflansch 4 verschwenkt. Durch die Verschwenkung des Steuerhebels 11 wird auch der Scharnierbügel 7 entgegen dem Uhrzeigersinn um das Gelenk 9 verschwenkt. Die Gelenkplatte 21 des Gleitschlittens 6 wird durch die Verschwenkung des Scharnierbügels 7 um das Gelenk 9 ebenfalls zwangsgeführt, da sie mit dem Scharnierbügel 7, dem Steuerhebel 11 und dem Karosserieflansch 4 - wie ausgeführt - ein Mehrgelenk bildet.

Die Antriebsbewegung für die Öffnung der Schiebetüre 1 kann allerdings auch auf andere Weise eingeleitet werden, insbesondere durch einen motorischen und/oder manuellen Antrieb des Scharnierbügels 7 und/oder des Steuerhebels 11 um eines oder mehrere der Gelenke 9, 8, 13, 12.

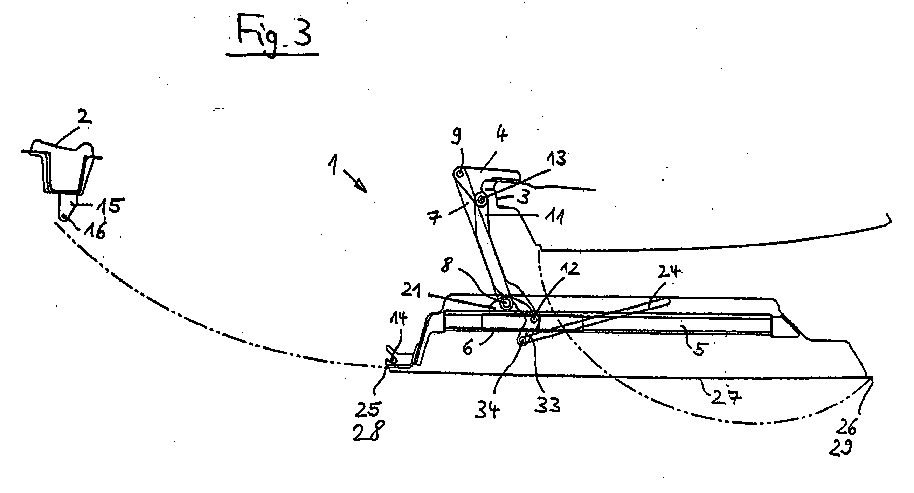

Die vollständig geöffnete Stellung der Schiebetüre 1 ist in Fig. 3 dargestellt. Der Hebelarm 33 wurde entgegen dem Uhrzeigersinn verschwenkt. Im Ausführungsbeispiel wurde der Hebelarm 33 um etwas mehr als 90° entgegen dem Uhrzeigersinn verschwenkt. Der Führungsstift 34 hat das vordere, geschlossene Ende der Führungsbahn 24 erreicht. Der Steuerhebel 11 und der Scharnierbügel 7 wurden um einen Winkel von etwa 120° entgegen dem Uhrzeigersinn um die Gelenke 13 und 9 verschwenkt.

Wenn die Schiebetüre 1 geschlossen werden soll, werden die beschriebenen Stellungen in umgekehrter Reihenfolge durchlaufen. Die Schließbewegung der Schiebetüre 1 kann dadurch bewirkt werden, daß die Führungsschiene 5 motorisch und/oder manuell relativ zum Gleitschlitten 6 nach vorne bewegt wird. Die Relativbewegung der Führungsschiene 5 wird durch die Führungsbahn 24 auf den Führungsstift 34 übertragen und von dort über den Hebelarm 33 in das beschriebene Mehrgelenk eingeleitet. Es ist allerdings auch möglich, die Schließbewegung in einer Weise einzuleiten, wie sie für die Öffnungsbewegung beschrieben wurde.

In Fig. 1, 2 und 3 sind die Wege des vorderen Endes 25 und des hinteren Endes 26 des äußeren Türblechs 27 eingezeichnet. Das vordere Ende 25 des äußeren Türblechs 27 bewegt sich zunächst in einem Winkel von etwa 30° gegenüber der Fahrzeug-Längsachse nach hinten und außen. Der Neigungswinkel der U-förmigen Aufnahme 14 entspricht diesem Winkel. Es beschreibt anschließend einen Bogen mit einem großen Radius, dessen Ende 28 eine parallel zur Fahrzeug-Längsachse verlaufende Tangente aufweist. Das hintere Ende 26 des äußeren Türblechs 27 bewegt sich zunächst annähernd rechtwinkelig von der Karosserie weg und beschreibt dann einen enger werdenden Bogen bis zu einem Endpunkt 29, der im wesentlichen denselben Abstand von der Karosserie des Fahrzeugs aufweist wie der Endpunkt 28 des vorderen Endes 25.

Es ist möglich, die Schiebetüre durch die Einleitung einer einzigen Bewegung zu öffnen und zu schließen. Insbesondere kann die Schiebetüre durch eine Bewegung der Führungsschiene 5 relativ zu dem Gleitschlitten 6 geöffnet und geschlossen werden. Es ist allerdings auch möglich, die Öffnungsbewegung und Schließbewegung der Schiebetüre auf andere Weise zu erzeugen und einzuleiten, wie oben beschrieben.

Durch die Ausführungsform nach Fig. 1 bis 3 wird eine Schiebetüre realisiert, deren bewegliche Teile in einer Richtung quer zur Fahrzeug-Längsachse nur sehr wenig Platz benötigen. Die maximale Breite dieser beweglichen Teile wird vom Abstand zwischen der Lage des Führungsstifts 34 in der Fig. 1 und der Lage des Führungsstifts 34 in der Fig. 3 bestimmt.

Es ist möglich, daß die Führungsbahn 24 an ihrem hinteren, inneren Ende einen gekrümmten Abschnitt aufweist, dessen Neigung gegenüber der Führungsschiene 5 größer ist als der lineare Bereich (in der Zeichnung nicht dargestellt). Hierdurch verläuft die Öffnungsbewegung des hinteren Endes 26 des äußeren Türblechs 27 aus der geschlossenen Stellung gemäß Fig. 1 in einem rechten Winkel, also noch steiler als bei Fig. 1. Durch die Gestaltung der Neigung der Führungsbahn kann das Ausschwenkverhalten der Schiebetüre gesteuert werden.

Vorteilhaft ist es, wenn der Führungsstift 34 während des gesamten Bewegungsablaufs auf der dem Karosserieflansch 4 bzw. den Gelenken 9, 13 abgewandten Seite einer gedachten Linie 35 liegt, die durch das Gelenk 12 verläuft, und zwar senkrecht zur Verbindungslinie zwischen den Gelenken 13, 12 des Steuerhebels 11. In Fig. 1 ist diese Linie 35 beispielhaft eingezeichnet. Dadurch, daß der Führungsstift 34 während des gesamten Bewegungsablaufs vor dieser Linie 35 liegt, wird eine "Übertotpunktlage" vermieden, die die Öffnungsbewegung und/oder Schließbewegung der Schiebetüre behindern oder unmöglich machen könnte.

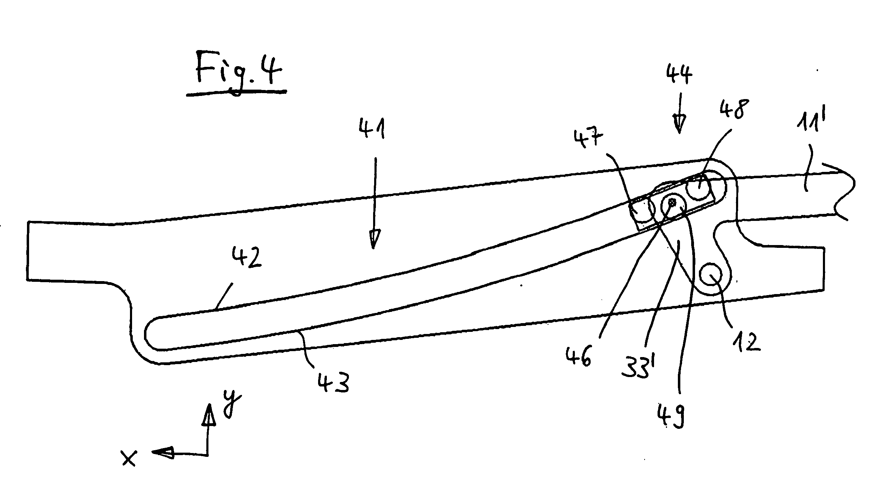

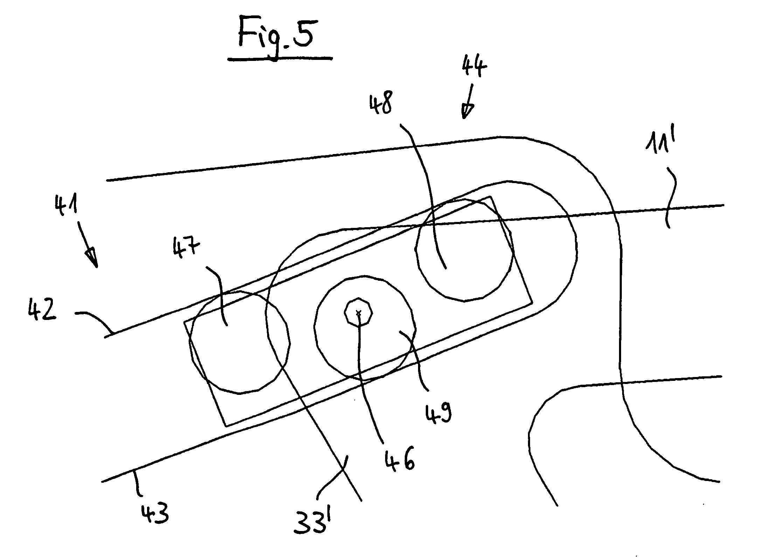

Fig. 4 und 5 zeigen eine erfindungsgemäße Führungsbahn 41, die abweichend von der Führungsbahn 24 der Ausführungsform nach den Fig. 1 bis 3 ausgebildet ist. Die Führungsbahn 41 ist als Hohlbahn ausgeführt. Sie umfaßt eine erste Führungskontur 42 und eine zweite Führungskontur 43, die einander gegenüberliegen. Die Führungskonturen 42, 43 werden von den Begrenzungen der Führungsbahn 41 gebildet.

In der Führungsbahn 41 ist ein Führungswagen 44 geführt. Der Führungswagen 44 ist an dem Steuerhebel 11' des Mehrgelenks um eine Achse 46 drehbar gelagert.

Die Achse 46 verläuft vertikal. Der Steuerhebel 11' ist an dem Gleitschlitten 6 um das Gelenk 12 drehbar gelagert. Im Unterschied zur Ausführungsform nach Fig. 1 bis 3 weist der Steuerhebel 11' bei der Ausführungsform nach Fig. 4 und 5 einen Hebelarm 33' auf, der sich von einem Führungsstift bzw. eienr Führungsrolle 49 nach außen erstreckt. Dabei knickt der Hebelarm 33' gegenüber der Verbindungslinie zwischen dem Gelenk 13 und dem Führungsstift, also der Längserstreckung des Steuerhebels 11', nach außen ab. Die Kinematik des Steuerhebels 11', des Gelenks 12 und des Führungsstifts der Ausführungsform nach Fig. 4 und 5 ist jedoch im wesentlichen dieselbe wie die Kinematik des Steuerhebels 11, des Gelenks 12 und des Führungsstifts der Ausführungsform nach Fig. 1 bis 3.

Fig. 5 zeigt den Führungswagen 44 in einer vergrößerten Darstellung. Der Führungswagen 44 weist drei Führungsrollen 47, 48, 49 auf. Jede Führungsrolle 47, 48, 49 ist an dem Führungswagen 44 um eine vertikale Achse drehbar gelagert. Die Führungsrollen 47, 48 liegen an der ersten Führungskontur 42 an. Die Führungsrolle 49 liegt an der zweiten Führungskontur 43 an. Die Führungsrollen 47, 48 liegen zu beiden Seiten der Führungsrolle 49. Die Führungsrolle 49 liegt also zwischen den Führungsrollen 47, 48.

In Fig. 4 ist die Fahrzeuglängsrichtung mit x bezeichnet, wobei der zugehörige Pfeil in Richtung nach vorne zeigt. Die Richtung nach innen ist in Fig. 4 mit y bezeichnet. Wie aus Fig. 4 ersichtlich verläuft die Führungsbahn 41 in Richtung nach vorne nach außen. Sie weist in ihrem hinteren Bereich eine stärkere Neigung nach außen auf als in ihrem vorderen Bereich. Die Führungsbahn 41 ist über ihre gesamte Länge gekrümmt. Sie könnte allerdings auch durchgehend linear ausgestaltet sein.

Bei geschlossener Schiebetüre befindet sich der Führungswagen 44 mit den Führungsrollen 47, 48, 49 am hinteren Ende der Führungsbahn 41. Während des Öffnungsvorgangs durchläuft der Führungswagen 44 die Führungsbahn 41 in Richtung nach vorne. Während dieser Öffnungsbewegung der Schiebetüre stützen sich die Führungsrollen 47, 48 an der ersten Führungskontur 42 ab. Die erste Führungskontur 42 nimmt die von den Führungsrollen 47, 48 ausgeübte Kraft auf. Dadurch, daß der Führungswagen 44 um die Achse 46 schwenkbar ist, liegen stets beide Führungsrollen 47, 48 an der ersten Führungskontur 42 an. Bei vollständig geöffneter Schiebetüre befindet sich der Führungswagen 44 am vorderen Ende der Führungsbahn 41.

Wenn die Schiebetüre anschließend geschlossen wird, durchläuft der Führungswagen 44 mit den Führungsrollen 47, 48, 49 den umgekehrten Weg. Er bewegt sich in der Führungsbahn 41 nach hinten. Während dieser Schließbewegung stützt sich die Führungsrolle 49 an der zweiten Führungskontur 43 ab. Die von der Führungsrolle 49 ausgeübte Kraft wird von der zweiten Führungskontur 43 aufgenommen.

Die Führungsrollen 47, 48, 49 weisen eine elastische Rollfläche auf. Hierdurch wird eine elastische Vorspannung erzeugt. Ferner bringt diese Ausgestaltung einen Toleranzausgleich mit sich.

Es ist allerdings auch möglich, stattdessen oder zusätzlich eine oder mehrere oder alle Führungsrollen 47, 48, 49 durch ein Federelement elastisch vorzuspannen. Im allgemeinen reicht es aus, wenn eine Führungsrolle durch ein Federelement elastisch vorgespannt ist. Vorteilhaft ist es, wenn die Führungsrolle 49 durch ein Federelement vorgespannt ist. Es kann allerdings auch vorteilhaft sein, wenn stattdessen oder zusätzlich die Führungsrollen 47, 48 durch ein Federelement vorgespannt sind.

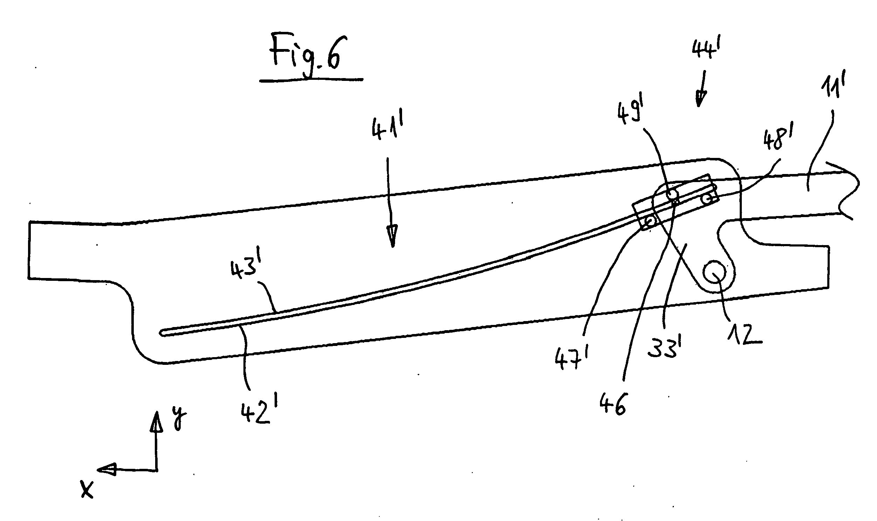

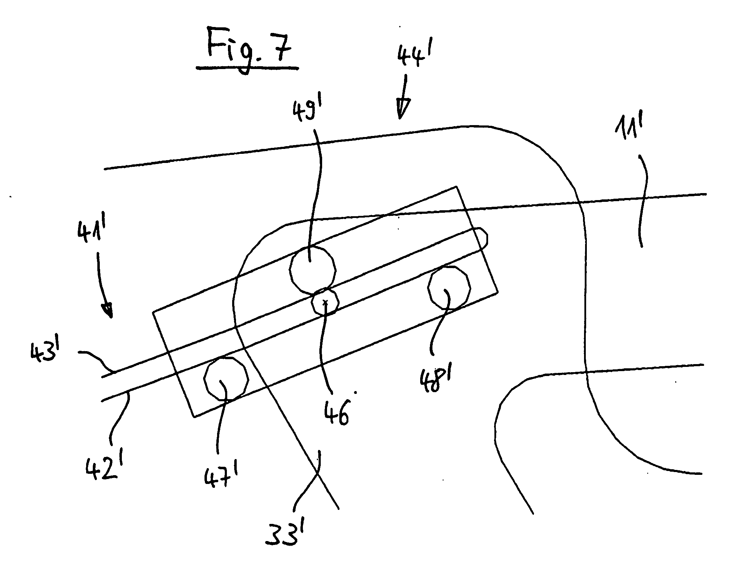

Bei der in Fig. 6 und 7 gezeigten Ausführungsform ist die Führungsbahn 41' als Schiene ausgeführt. Bestandteile, die denjenigen der Ausführungsform nach Fig. 4 und 5 entsprechen, sind mit denselben Bezugszeichen versehen.

Die als Schiene ausgeführte Führungsbahn 41' umfaßt eine erste Führungskontur 42' und eine zweite Führungskontur 43', die einander gegenüberliegen. Die Führungskonturen 42', 43' werden von den Außenkonturen der Führungsbahn 41' gebildet.

In der Führungsbahn 41' ist ein Führungswagen 44' geführt. Der Führungswagen 44' weist drei Führungsrollen 47', 48', 49' auf. Die Führungsrollen 47', 48' liegen an der ersten Führungskontur 42' an. Die Führungsrolle 49' liegt an der zweiten Führungskontur 43' an. Die Führungsrollen 47', 48' liegen zu beiden Seiten der Führungsrolle 49'. Die Führungsrolle 49' liegt also zwischen den Führungsrollen 47', 48'.

Während der Öffnungsbewegung der Schiebetüre stützen sich die Führungsrollen 47', 48' an der ersten Führungskontur 42' ab. Wenn die Schiebetüre geschlossen wird, stützt sich die Führungsrolle 49' an der zweiten Führungskontur 43' ab. Die Führungsrollen 47', 48', 49' weisen elastische Rollflächen auf. Es ist allerdings auch möglich, daß eine, mehrere oder alle Führungsrollen 47', 48', 49' durch ein Federelement elastisch vorgespannt sind, wie bei der Ausführungsform nach Fig. 4 und 5.

Bei der Ausführungsform nach Fig. 4 und 5 liegt die erste Führungskontur 42 innen und die zweite Führungskontur 43 außen. Demgegenüber liegt bei der Ausführungsform nach Fig. 6 und 7 die erste Führungskontur 42' außen und die zweite Führungskontur 43' innen.

## Patentansprüche

1. Schiebetüre für ein Fahrzeug mit einer Führungsschiene (5), mit einem Gleitschlitten (6), der an der Führungsschiene (5) längsverschieblich gelagert ist und der durch ein Mehrgelenk (7, 11,4) mit der Fahrzeugkarosserie verindbar ist, und mit einem Führungsteil, das in einer an der Schiebetüre vorgesehenen Führungsbahn (41, 41') geführt ist und das als Führungswagen (44, 44') ausgebildet ist,
**dadurch gekennzeichnet,**
**daß** der Führungswagen (44, 44') an einem Hebel (11') drehbar (46) gelagert ist, der Bestandteil des Mehrgelenks ist.

2. Schiebetüre nach Anspruch 1 , **dadurch gekennzeichnet, daß** der Führungswagen (44, 44') mehrere Führungsrollen (47, 48, 49; 47', 48', 49') aufweist.

3. Schiebetüre nach Anspruch 2, **dadurch gekennzeichnet, daß** mindestens eine Führungsrolle (47, 48, 49, 47', 48', 49') elastisch vorgespannt ist.

4. Schiebetüre nach einem der vorhergehenden Ansprüche, **dadurch gekennzeichnet, daß** die Führungsbahn (41, 41) eine erste Führungskontur (42, 42') und eine zweite Führungskontur (43, 43') aufweist.

5. Schiebetüre nach einem der vorhergehenden Ansprüche, **dadurch gekennzeichnet, daß** die Führungsbahn (41) als Hohlbahn ausgeführt ist.

6. Schiebetüre nach einem der Ansprüche 1 bis 5, **dadurch gekennzeichnet, daß** die Führungsbahn (41') als Schiene ausgeführt ist.

7. Schiebetüre nach den Ansprüchen, zundh **dadurch gekennzeichnet, daß** mindestens eine Führungsrolle (47, 48; 47', 48') an einer Führungskontur (42, 42') anliegt und daß mindestens eine Führungsrolle (49, 49') an der anderen Führungskontur (43, 43') anliegt.

8. Schiebetüre nach Anspruch 7, **dadurch gekennzeichnet, daß** eine Führungsrolle (49, 49') an einer Führungskontur (43, 43') anliegt und daß zwei Führungsrollen (47, 48; 47', 48') an der anderen Führungskontur (42, 42') anliegen.

9. Fahrzeug, insbesondere Kraftfahrzeug, **gekennzeichnet durch** eine oder mehrere Schiebetüren nach einem der Ansprüche 1 bis 8.

## Claims

1. A sliding door for a vehicle comprising a guide rail (5), having a sliding carriage (6) which is longitudinally displaceably supported at the guide rail (5) and which can be connected by a multijoint (7, 11, 4) to the vehicle body and comprising a guide part which is guided at a guide track (41, 41') provided at the sliding door, and which is designed as a guide carriage (44, 44'),
**characterised in that**
the guide carriage (44, 44') is rotatably (46) supported at a lever (11') which is a component of the multijoint.

2. A sliding door in accordance with claim 1, **characterised in that** the guide carriage (44, 44') has a plurality of guide rollers (47, 48, 49; 47', 48', 49').

3. A sliding door in accordance with claim 2, **characterised in that** at least one guide roller (47, 48, 49; 47', 48', 49') is elastically preloaded.

4. A sliding door in accordance with one of the preceding claims, **characterised in that** the guide track (41, 41') has a first guide contour (42, 42') and a second guide contour (43, 43').

5. A sliding door in accordance with one of the preceding claims, **characterised in that** the guide track (41) is designed as a hollow track.

6. A sliding door in accordance with one of the claims 1 to 5, **characterised in that** the guide track (41') is designed as a rail.

7. A sliding door in accordance with one of the claims 2 and 4, **characterised in that** at least one guide roller (47, 48; 47', 48') contacts a guide contour (42, 42'); and **in that** at least one guide roller (49, 49') contacts the other guide contour (43, 43').

8. A sliding door in accordance with claim 7, **characterised in that** a guide roller (49, 49') contacts a guide contour (43, 43'); and **in that** two guide rollers (47, 48; 47', 48') contact the other guide contour (42, 42').

9. A vehicle, in particular a motor vehicle, **characterized by** one or more sliding doors in accordance with one of the claims 1 to 8.

## Revendications

1. Porte coulissante pour un véhicule avec un rail de guidage (5), un chariot coulissant (6) qui est logé d'une manière déplaçable longitudinalement au rail de guidage (5) et qui peut être relié par une articulation multiple (7, 11, 4) à la carrosserie du véhicule, et avec une partie de guidage qui est guidée dans une voie de guidage (41, 41') prévue à la porte coulissante, et qui est réalisée comme chariot de guidage (44, 44'), **caractérisée en ce que** le chariot de guidage (44, 44') est logé d'une manière tournante (46) à un levier (11') qui fait partie de l'articulation multiple.

2. Porte coulissante selon la revendication 1, **caractérisée en ce que** le chariot de guidage (44, 44') présente plusieurs rouleaux de guidage (47, 48, 49; 47', 48', 49').

3. Porte coulissante selon la revendication 2, **caractérisée en ce qu'**au moins un rouleau de guidage (47, 48, 49, 47', 48', 49') est précontraint élastiquement.

4. Porte coulissante selon l'une des revendications précédentes, **caractérisée en ce que** la voie de guidage (41, 41') présente un premier contour de guidage (42, 42') et un deuxième contour de guidage (43, 43').

5. Porte coulissante selon l'une des revendications précédentes, **caractérisée en ce que** la voie de guidage (41) est réalisée comme une voie creuse.

6. Porte coulissante selon l'une des revendications 1 à 5, **caractérisée en ce que** la voie de guidage (41') est réalisée comme rail.

7. Porte coulissante selon les revendications 2 et 4, **caractérisée en ce qu'**au moins un rouleau de guidage (47, 48; 47', 48') s'applique à un contour de guidage (42, 42'), et **en ce qu'**au moins un rouleau de guidage (49, 49') s'applique à l'autre contour de guidage (43, 43').

8. Porte coulissante selon la revendication 7, **caractérisée en ce qu'**un rouleau de guidage (49, 49') s'applique à un contour de guidage (43, 43'), et **en ce que** deux rouleaux de guidage (47, 48; 47', 48') s'appliquent à l'autre contour de guidage (42, 42').

9. Véhicule, en particulier véhicule à moteur, **caractérisé par** une ou plusieurs portes coulissantes selon l'une des revendications 1 à 8.
